# NEUE EUROPÄISCHE PATENTSCHRIFT

(11) **EP 1 217 246 B2**
(45) Veröffentlichungstag und Bekanntmachung des Hinweises auf die Entscheidung über den Einspruch: **31.08.2011**
(45) Hinweis auf die Patenterteilung: 02.11.2006
(21) Anmeldenummer: 01127995.7
(22) Anmeldetag: 24.11.2001
(51) Int. Cl.: F16D 65/092

(54) **Bremsbacke, insbesondere für Scheibenbremsen**
Brake pad for disc brakes
Patin de frein pour frein à disque

(30) Priorität: 19.12.2000 DE 10063362
(43) Veröffentlichungstag der Anmeldung: 26.06.2002
(73) Patentinhaber: Federal-Mogul Friction Products GmbH, 65520 Bad Camberg (DE)
(72) Erfinder: Emmet, Robert A., Dipl.-Ing., 56477 Rennerod (DE); Strauss, Wilfried, Dipl.-Ing., 69483 Wald-Michelbach (DE)
(74) Vertreter: Kurig, Thomas

(56) Entgegenhaltungen:
- EP-A- 0 503 625
- EP-B1- 0 552 427
- DE-A- 1 600 155
- DE-T2- 60 006 170
- DE-T2- 69 109 671
- GB-A- 2 259 553
- JP-A- 57 090 931
- JP-A- 61 270 529
- US-A- 4 685 543
- PATENT ABSTRACTS OF JAPAN vol. 009, no. 124 (M-383), 29. Mai 1985 (1985-05-29) & JP 60 008534 A (TOUYOU CARBON KK), 17. Januar 1985 (1985-01-17)

## Beschreibung

Die Erfindung betrifft eine Bremsbacke, insbesondere für Scheibenbremsen, beinhaltend eine mit Profilen versehene metallische Rückenplatte, auf der mindestens ein Reibbelag befestigt ist.

Der DE-A 197 06 123 ist eine derartige Bremsbacke zu entnehmen, wobei die Rückenplatte in Umfangsrichtung mindestens zwei Abschnitte mit unterschiedlicher Rückenplattendicke aufweist. Die Formgebungen sollen hierbei so ausgebildet sein, dass sie zugleich die thermische Beanspruchung eines die Bremsbacke in Wirkeingriff bringenden Betätigungselementes entlasten. Beschrieben werden Wellprofile, Rechteckprofile, Eindrückungen, Sicken oder dergleichen. Auch wenn hier bereits eine gewisse thermische Entlastung bzw. Entkoppelung realisierbar ist, werden dennoch bei erhöhten Bremskräften unerwünschte Temperaturen im Bereich des Betätigungselementes, insbesondere Bremszylinders bzw. dessen peripherer Bauteile, wirksam, die zu Schäden fuhren können.

Der US-A 6,041,893 ist eine Bremsbacke zu entnehmen, beinhaltend eine metallische Rückenplatte sowie einen darauf befestigten Reibbelag. Zwischen Reibbelag und Rückenplatte erstreckt sich mindestens eine zusätzliche Schicht, der gewisse Dämpfungseigenschaften zugeordnet sind und welche auch beim Abrieb des Reibbelages zu akustischen Warnungen führt.

EP 0503625 A offenbart eine Bremsbacke für eine Scheibenbremse mit einer Rückenplatte aus Metall, mit der ein Reibmaterialblock verbunden ist. Zwischen der Rückenplatte und dem Reibbelag ist eine Wärmeisolationsschicht aus Keramik angeordnet, die durch ein Plasmaspritzverfahren vollflächig aufgebracht wird. In einer Ausführungsform ist eine rechteckige Ausnehmung in der Rückenplatte vorgesehen, die zusammen mit einem Steg mit etwa schwalbenschwanzförmiger Kontur zur Befestigung des Bremsbelags an einer Bremszange dient, so dass eine konstante Materialdicke vorliegt.

In US 4685543 A ist eine Trägerplatte für einen Bremsbelag beschrieben, die aus einer dünnen Lage von korrosionsbeständigem Material geformt ist. Die Trägerplatte weist einen vertieften, im wesentlichen kreisförmigen Bereich auf, welcher der Form des Bremskolbens entspricht. In dem vertieften Bereich wird durch einen Luftspalt zwischen Basiselement und Bremszylinder eine thermische Barriere gebildet.

Darüber hinaus ist in DE 1600155 A ein Bremsbelagträger für Scheibenbremsen beschrieben, bei dem eine zusätzliche Platte bzw. ein Blech fest an der Trägerplatte des Bremsbelags angebracht ist, um die Geräuschbildung zu vermindern und einen möglichst gleichmäßigen Belagverschleiß zu erreichen. Das Reibbelagmaterial steht in direktem Kontakt mit der Trägerplatte.

Die JP 57-90931 offenbart eine Bremsbacke nach dem Oberbegriff des Anspruchs 1.

Der Erfindung liegt die Aufgabe zugrunde, eine Bremsbacke gemäß gattungsbildendem Teil des ersten Patentanspruches so zu optimieren, dass durch Temperatureinwirkung bedingte Beschädigungen des Betätigungselementes, insbesondere Bremszylinders bzw. den damit zusammenwirkenden peripheren Bauteilen, vermieden wird.

Diese Aufgabe wird durch eine Bremsbacke nach Anspruch 1 gelöst.

Vorteilhafte Weiterbildungen des Erfindungsgegenstandes sind den Unteransprüchen zu entnehmen.

In Weiterbildung des Standes der Technik, insbesondere der JP 5 790 931, ermöglicht der Erfindungsgegenstand eine deutliche Entkoppelung des Wärmeflusses zwischen Reibbelag und Betätigungselement, insbesondere Bremszylinder sowie den damit zusammenwirkenden Bauteilen, wie Manschetten oder dergleichen. Die, insbesondere von der Bremsscheibe bei der Betätigung des bzw. der Bremszylinder auf den Reibbelag übertragene Reibungswärme pflanzt sich somit nicht mehr unmittelbar in die metallische Rückenplatte und somit das Betätigungselement fort, vielmehr wird die Temperatur durch das nachgeordnete, insbesondere in den Profilen vorgesehene Material niedrigerer Wärmeleitfähigkeit weitestgehend kompensiert.

Infolge der speziellen Ausgestaltung der Profile, insbesondere der lediglich partiell in Richtung des Betätigungselementes sich erstreckenden Erhebungen wird eine weitere Entkoppelung des Temperaturflusses realisiert. Die auf einem Kreisumfang angeordneten segmentartig ausgebildeten Erhebungen verbleiben im wesentlichen innerhalb des Durchmessers (der Querschnittsfläche) des bzw. der Betätigungselemente, so dass die Berührungsfläche des bzw. derselben mit der metallischen Rückenplatte auf diese Segmente begrenzt ist.

Einem weiteren Gedanken der Erfindung gemäß ist das Material mit geringerer Wärmeleitfähigkeit lediglich in den Profilen vorgesehen.

Die metallische Rückenplatte kann sowohl eine Gußplatte mit bereits eingeformten Profilen als auch eine konventionelle Stahlrückenplatte mit entsprechenden Einprägungen sein. Die aus der metallischen Rückenplatte in Richtung des Betätigungselementes hervorragenden Profile weisen vorzugsweise eine Höhe < 2 mm, insbesondere 0,5 bis 1,0 mm auf.

Die mit der Profilierung der metallischen Rückenplatte verbundenen Erhebungen bringen folgende Vorteile mit sich:
Reduzierung der Wärmeleitung;
Reduzierung der Wärmestrahlung;
Erhöhung der konvektiven Wärmeübertragung an die Umwelt.

Anzuwenden ist der Erfindungsgegenstand bevorzugt bei allen Scheibenbremsen (hydraulischen und pneumatischen). Durch diese Lösung kann ebenfalls auf weitere im Stand der Technik gemäß US-A 6,041,893 beschriebene zusätzliche Schichten verzichtet werden.

Bevorzugte Materialien für die Profile bzw. deren Verbindungen weisen als wesentliche Bestandteile auf:
Magnesiumoxid, Vermiculite, Fasern, insbesondere PAN-Fasern, Steinwolle, Recyclingmaterialien und Harze, insbesondere Phenolharze, Zugaben an Kieselsäure und Glasfasern sowie Wollastonit sind ebenfalls denkbar. Im folgenden werden Bereiche für mögliche Materialien geringer Wärmeleitfähigkeit wiedergegeben (alle Angaben in Massen-%)

| | |
|---|---|
| Magnesiumoxid | 10 - 14 % |
| Vermiculite | 30 - 35 % |
| PAN-Fasern | 1 - 2 % |
| Steinwolle | 18 - 22 % |
| Glasfaser | 1 - 3 % |
| Wollastonit | 6 - 8 % |
| Phenolharz | 12 - 16 % |
| Recycle Material | 5 - 8 % |
| Kieselsäure | 3 - 5 % |

Der Erfindungsgegenstand ist anhand eines Ausführungsbeispiels in der Zeichnung dargestellt und wird wie folgt beschrieben. Es zeigen:
- Figur 1: Prinzipskizze einer Bremsbacke in verschiedenen Ansichten;
- Figur 2: Ansicht gemäß Linie II-II der Figur 1
- Figur 3: eine erfindungsgemäße Bremsbacke mit zwei Betätigungselementen
- Figur 4: Darstellung segmentartiger Erhebungen auf der Rückenplatte der Bremsbacke;
- Figur 5: Querschnitt durch einen Teilbereich der Bremsbacke gemäß Figur 3.

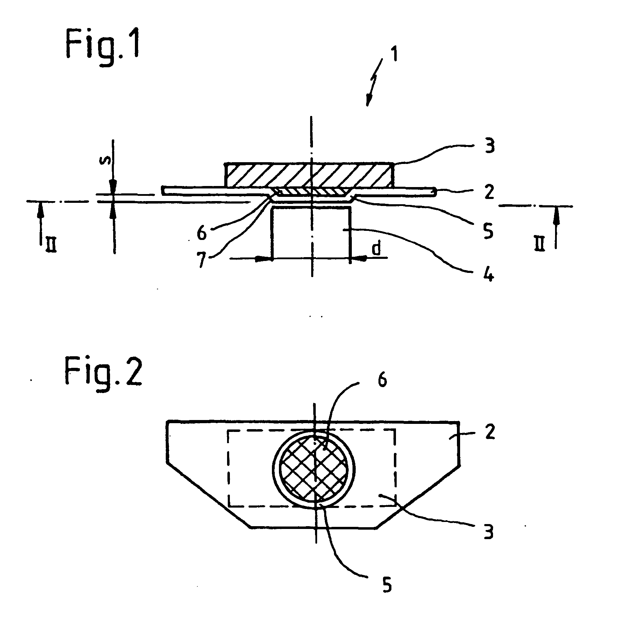

Figur 1 zeigt als Prinzipskizze eine Bremsbacke 1, beinhaltend eine metallische Rückenplatte 2 sowie einen Reibbelag 3, der beispielsweise durch Vulkanisation auf der Rückenplatte 2 befestigt ist. Die Bremsbacke 1 wirkt in diesem Beispiel mit einem Bremszylinder 4 als Betätigungselement zusammen und beinhaltet eine Profilierung 5 in Form einer Vertiefung/Erhebung, deren Querschnittsform im wesentlichen innerhalb des Durchmessers d des Bremszylinders 4 vorgesehen ist. Die metallische Rückenplatte 2 soll in diesem Beispiel eine Stahlplatte sein, in welche das Profil 5 eingeprägt ist. Reibbelagseitig ist innerhalb des Profiles 5 ein Belagmaterial 6 eingebracht, das eine niedrigere Wärmeleitfähigkeit als das Reibmaterial 3 selber aufweist. Durch diese Maßnahme kann der Wärmefluß vom Reibbelag 3 in Richtung der metallischen Rückenplatte 2 sowie den sich daran anschließenden Bremszylinder 4 reduziert werden, dergestalt, dass insbesondere im problematischen Bereich des Bremszylinders 4 die Temperaturweiterleitung gehemmt wird. Der zum Bremszylinder 4 gerichtete erhöhte Bereich 7 des Profiles 5 weist eine Bauhöhe von s = 1 mm auf. Das Profil 5 weist eine kreisförmige Querschnittsfläche auf (Fig. 2)

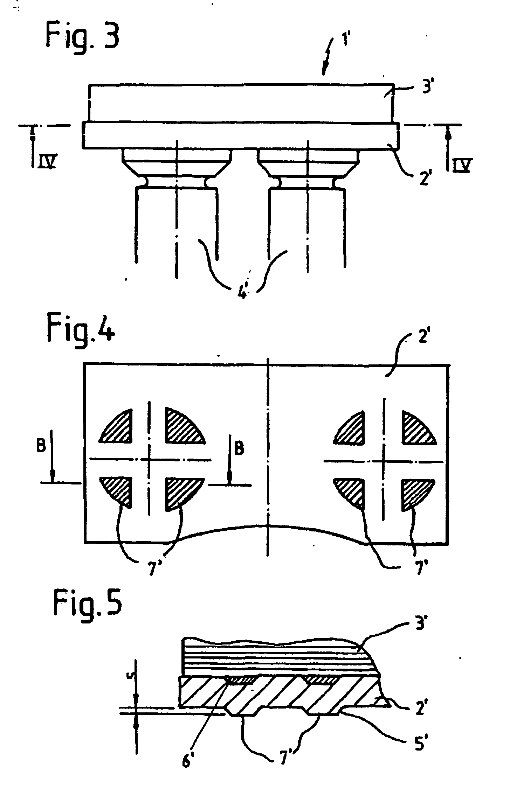

Figur 3 zeigt eine erfindungsgemäße Bremsbacke 1', beinhaltend eine in diesem Beispiel als Gußkörper ausgebildete Rückenplatte 2' sowie einen Reibbelag 3'. In diesem Beispiel kommen zwei Bremszylinder 4' zum Einsatz.
Figur 4 zeigt einen Querschnitt durch die Rückenplatte 2' gemäß Schnittlinie IV -IV, wobei im Bereich der Bremszylinder 4' segmentartig ausgebildete, auf einem gedachtem Kreisumfang angeordnete Profile 5' vorgesehen sind. Diese profilartigen, sich in Richtung des Kraftteiles erstreckenden Erhebungen 7' sind bei der Erzeugung der Gußplatte 2' bereits mit eingeformt worden.
Figur 5 zeigt einen Schnitt entlang der Linie B-B gemäß Figur 4. Erkennbar ist die Rückenplatte 2', der Reibbelag 3' sowie die eingebrachten Profile 5', die reibbelagseitig als Vertiefung und kraftteilseitig als Erhöhung 7' vorgesehen sind. Reibbelagseitig ist - wie bereits in Figur 1 angesprochen - ein Belagmaterial 6' vorgesehen, das eine gegenüber dem Reibbelag reduzierte Wärmeleitfähigkeit aufweist.
Den Figuren 2 bis 5 ist zu entnehmen, dass die profilartigen Erhebungen 7, 7' im wesentlichen innerhalb der Querschnittsfläche des jeweiligen Bremszylinders 4' vorgesehen sind, so dass ausschließlich in diesen Bereichen eine Wärmeübertragung vom Reibbelag 3' über die Rückenplatte 2' in Richtung des Bremszylinders 4' ermöglicht wird. Infolge des Belagmateriales 6' wird eine Wärmeübertragung dergestalt reduziert, dass Beschädigungen am Bremszylinder 4', respektive den damit zusammenwirkenden Bauteilen, wie Schutzkappen oder dergleichen, sicher vermieden werden können. In diesem Beispiel weisen die Profile eine Höhe von 1,0 mm auf. Das zum Einsatz gelangende Material 6,6' weist in diesen Beispielen folgende Zusammensetzungen auf, auf welche der Erfindungsgegenstand jedoch nicht beschränkt ist (alle Angaben in Massen-%).

| | |
|---|---|
| Magnesiumoxid | 12.00 |
| Vermiculite | 33.00 |
| PAN-Fasern | 1.50 |
| Steinwolle | 20.00 |
| Glasfaser | 2.00 |
| Wollastonit | 7.00 |
| Phenolharz | 14.00 |
| Recycle Material | 6.50 |
| Kieselsäure | 4.00 |

## Patentansprüche

1. Bremsbacke, insbesondere für Scheibenbremsen, beinhaltend eine mit Profilen (5,5') versehene metallische Rückenplatte (2,2') auf der mindestens ein Reibbelag (3,3') befestigt ist, und wobei die Profile (5,5') innerhalb der Querschnittsfläche eines Betätigungselements (4,4') vorgesehen sind und die Profile (5,5') jeweils durch mindestens eine einzelne Erhebung, respektive korrespondierende reibbelagseitige Vertiefung gebildet sind, wobei mehrere kreissektorartig ausgebildete Profile (5,5') auf einem Kreisumfang im wesentlichen auf gleichem Radius angeordnet sind **dadurch gekennzeichnet, daß** nur in den Profilen (5,5') ein Material (6,6') mit gegenüber dem Reibbelag (3,3') geringerer Wärmeleitfähigkeit vorgesehen ist.

2. Bremsbacke nach Anspruch 1, wobei die Höhe der Profile (5,5') kleiner als 2 mm ist, insbesondere 0,5 bis 1,0 mm beträgt.

3. Bremsbacke nach Anspruch 1, **dadurch gekennzeichnet, dass** das Material (6,6') mit niedrigerer Wärmeleitfähigkeit folgende wesentliche Stoffe beinhaltet: Magnesiumoxid, Vermiculite, Fasern, wie Glasfasern oder PAN-Fasern, Steinwolle, Wollastonit, Kieselsäure und Harze, wie Phenolharze, als Bindemittel.

4. Bremsbacke nach einem der Ansprüche 1 bis 3, **dadurch gekennzeichnet, dass** das Material (6,6') mit niedriger Wärmeleitfähigkeit folgende Zusammensetzung (in Massen-%) aufweist:
| | |
|---|---|
| Magnesiumoxid | 10 - 14 % |
| Vermiculite | 30 - 35 % |
| PAN-Fasern | 1 - 2 % |
| Steinwolle | 18 - 22 % |
| Glasfaser | 1 - 3 % |
| Wollastonit | 6 - 8 % |
| Phenolharz | 12 - 16 % |
| Recycle Material | 5 - 8 % |
| Kieselsäure | 3 - 5 % |

## Claims

1. Brake pad, in particular for disk brakes, comprising a back plate (2,2') provided with profiles (5,5') to which at least one friction lining (3,3') is attached and whereby the profiles (5,5') are provided within the cross-sectional area of an activation element (4,4') and the profiles (5,5') are each formed by at least one single raised area or a corresponding depression on the side of the friction lining, wherein a plurality of profiles (5,5') having an approximately circular segment shape are disposed on a circular periphery essentially on a common radius and **characterised in that** a material (6,6') with a lower heat conductivity than that of the friction lining (3,3') is provided only in the profiles (5,5').

2. Brake pad according to claim 1, whereby the height of the profiles (5,5') is less than 2 mm, in particular 0.5 to 1.0 mm.

3. Brake pad according to claim 1, **characterised in that** the material (6,6') with lower heat conductivity comprises the following essential material components: magnesium oxide, vermiculite, fibres, such as glass fibres or PAN fibres, rock wool, wollastonite, silicic acid and resins, such as phenolic resins, as bonding agents.

4. Brake pad according to any one of claims 1 to 3, **characterised in that** the material (6,6') with lower heat conductivity has the following composition (in mass %):
| | |
|---|---|
| Magnesium oxide | 10-14% |
| Vermiculite | 30-35 % |
| PAN fibres | 1-2% |
| Rock wool | 18-22 % |
| Glass fibres | 1-3% |
| Wollastonite | 6-8% |
| Phenolic resin | 12-16% |
| Recycled Material | 5-8% |
| Silicic acid | 3-5% |

## Revendications

1. Patin de frein, notamment pour des freins à disques, comprenant une plaque arrière métallique (2, 2') munie de profilés (5, 5') sur laquelle est fixée au moins une garniture de friction (3, 3'), les profilés (5, 5') étant prévus au sein de la surface de section d'un élément de commande (4, 4'), lesdits profilés (5, 5') étant constitués chacun d'au moins un seul bossage, respectivement d'un évidement correspondant côté garniture de friction, plusieurs profilés (5, 5') etant configurés sous forme de segments de cercle sont disposés sur une circonférence et essentiellement sur le même rayon et **caractérisé en ce que** qu'un matériau (6, 6') est prévu seulement dans les profilés (5,5') dont la conductibilité thermique est inférieure à celle de la garniture de friction (3, 3').

2. Patin de frein selon la revendication 1, la hauteur des profilés (5, 5') étant inférieure à 2 mm et se montant notamment à 0,5 jusqu à 1,0 mm.

3. Patin de frein selon la revendication 1, **caractérisé en ce que** le matériau (6, 6') de faible conductibilité thermique comporte les matières essentielles suivantes : de l'oxyde de magnésium, de la vermiculite, des fibres telles que les fibres de verre ou fibres de PAN, de la laine minérale, de la wollastonite, de l'acide silique et des résines telles que les résines phénoliques en tant que liant.

4. Patin de frein selon l'une quelconque des revendications là 3, **caractérisé en ce que** le matériau (6, 6') de faible conductibilité thermique présente la combinaison suivante (en pour cent en masse) :
| | |
|---|---|
| oxyde de magnésium | 10 -14 % |
| vermiculite | 30 - 35 % |
| fibres de PAN | 1 - 2 % |
| fibre minérale | 18 - 22 % |
| fibre de verre | 1 - 3 % |
| wollastonite | 6 - 8 % |
| résine phénolique | 12 - 16 % |
| matériau recyclé | 5 - 8 % |
| acide silique | 3 - 5 %. |
